Europäisches Patentamt

European Patent Office

Office européen des brevets

(11) Publication number: **0 382 432**
**A2**

## (12) EUROPEAN PATENT APPLICATION

(21) Application number: 90301129.4

(51) Int. Cl.⁵: **G06K 9/80**

(22) Date of filing: **02.02.90**

(30) Priority: **04.02.89 GB 8902524**

(43) Date of publication of application:
**16.08.90 Bulletin 90/33**

(84) Designated Contracting States:
**AT BE CH DE DK ES FR GR IT LI LU NL SE**

(71) Applicant: **PLESSEY OVERSEAS LIMITED**
**Vicarage Lane**
**Ilford Essex IG1 4AQ(GB)**

(72) Inventor: **Wright, Philip Timothy**
**34 Kennett Road, Halterworth**
**Romsey Hants, SO51 8PQ(GB)**

(74) Representative: **Elliott, Frank Edward**
**The Plessey Company Limited Intellectual**
**Property Department Vicarage Lane**
**Ilford, Essex IG1 4AQ(GB)**

(54) **Manuscript recognition.**

(57) The invention relates to a method of manuscript recognition, and to a manuscript recogniser. The method includes, for cursive script recognition, receiving digitised data indicative of manuscript to be recognised, processing the digitised data to derive the manuscript shape in encoded form as a plurality of vector directions, determining from the digitised data a respective quantised length for each vector direction, deriving an encoded vector string indicative of the vector directions and their lengths, comparing sub-string segments of the encoded vector string with stored encoded data representative of ligature shapes and selecting identified sub-string segments indicative of possible ligature shapes, combining each identified sub-string segment with immediately adjacent sub-string segments in the encoded vector string to derive longer sub-string segments and determining the quantised length of a sub-string as a proportional length of a total length of the sub-string defined by the manuscript shape. Each of the longer sub-string segments are compared with stored encoded data representative of character shapes to identify possible matching character shapes, and a letter net is derived indicative of possible character routes through the encoded vector string. The combination of characters in each character route is then compared with known combinations of stored characters to identify the script.

# MANUSCRIPT RECOGNITION

The present invention relates to a method of manuscript recognition and to a manuscript recogniser for recognising cursive script, characters and or graphic representations.

The term "manuscript" as used herein is intended to include both writing and drawing as appropriate.

There is a need for a system to allow a writer his own particular writing style, with the full range of character sets such as he might use during the course of writing, for whatever reason, on a piece of paper. These character sets would include,

{'A','B',....,'Z'},

{'a','b',....,'z'},

{'0','1',....,'9'},

{'?','@',' + ',.....}.

Similarly, there is a need for such a system additionally or alternatively, to permit a draughtsman to prepare freehand sketches using a wide range of shapes.

To date, script recognition products, such as the Penpad, have limited the user to one or two of these character sets (e.g., upper or lower case characters only). This limits the usefulness of the recogniser. However, the greater limitation is in the style and placement of the writing. Systems hitherto have generally been confined to the recognition of unconnected letters only.

Apart from size and placement of characters, 'natural writing style' means different things to different writers. In general, it is some arbitrary amalgam of letters within a word. These may be:-

    a) entirely unconnected letters,

    b) some mixture of connected and unconnected letters,

    c) entirely connected letters.

In general, the connectivity between letters within a word will depend on a number of factors, including word length, the letters within the word (e.g., 'i's and 't's often cause pen breaks in a word), and the writer's ability to spell the word.

There is also a need for a natural environment for the user to operate within. A system that can emulate, in hardware and software terms, conditions similar to those encountered when someone writes on a pad of paper with a pen or pencil, would present the most natural interface to the writer.

Such an arrangement is applicable also to the formalisation of free-hand sketches to accurate representations by recognition of the draughtmans intended drawing.

It is an object of the present invention to provide a method of manuscript recognition which strives to fulfil the above needs.

According to the present invention there is provided a method of manuscript recognition, the method includes receiving digitised data indicative of manuscript to be recognised, processing the digitised data to derive the manuscript shape in encoded form as a plurality of vector directions, determining from the digitised data a respective quantised length for each vector direction, deriving an encoded vector string indicative of the vector directions and their lengths, comparing sub-string segments of the encoded vector string with stored encoded data representative of ligature shapes and selecting identified first sub-string segments indicative of possible ligature shapes, combining each so identified first sub-string segment with immediately adjacent possible shape sub-string segments in the encoded vector string to derive longer sub-string segments, normalising the quantised length of each vector direction as a proportion of the total length of the longer sub-string segments or possible shape sub-string segments comparing each of the longer sub-string segments and the possible shape sub-string segments with stored encoded data representative of shapes of, for example, characters to identify possible matching character shapes, deriving, in the case of cursive script, a letter net indicative of possible character routes through the encoded vector string, and comparing the combination of characters in each character route with known combinations of stored characters to identify the script.

In a preferred embodiment for recognising cursive script, the possible character sub-string segments and the longer sub-string segments are limited to no more than five vector directions. A series of vector reductions on any sub-string segment encoding that exceeds five vectors is achieved by merging the smallest vector each time into one of the immediately adjacent vector directions.

The proportional length of each vector direction in the encoded vector string is compared with the corresponding length of the same vector direction of each possibly matching character encoded vector string extracted from a database, a difference measure being calculated between the two lengths, and the cumulative modulus of this measure determined over the length of the encoded sub-string segments.

The digitised data indicative of the script to be recognised is generated ideally in real-time from a quantised trace of the travel of a writing instrument on the surface of any x-y data device, the x-y data device generating the digitised data indicating the location of the writing instrument at a predetermined clock pulse rate as the script is written.

The x-y data device may comprise an electromagnetic tablet or an electronic paper digitiser.

According to another aspect of the invention there is provided a manuscript recogniser including means for receiving digitised data indicative of manuscript to be recognised, processing means for representing the manuscript in encoded form as a plurality of vector directions and for deriving an encoded vector string indicative of the vector directions and their respective lengths, a database, a comparator means for comparing sub-string segments of the encoded vector string with encoded data stored in the database representative of ligature shapes and for identifying first sub-string segments indicative of possible ligature shapes, means for combining each so identified first sub-string segment with immediately adjacent possible shape sub-string segments in the encoded vector string to derive longer sub-string segments, means for normalising the length of each vector direction as a proportion of the total length of each longer sub-string segment and each possible shape sub-string segment, the comparator means also serving for comparing each of the longer sub-string segments and the possible shape sub-string segments with stored encoded data in the database representative of, for example character shapes to identify possible matching shapes, means for deriving, in the case of cursive script a letter net indicative of possible character routes through the encoded vector string and for comparing the combination of characters in each character route with known combinations of stored characters to identify the script.

The present invention will be described further, by way of examples, with reference to the accompanying drawings in which:-

Figure 1 is a block diagram illustrating the task breakdown for a cursive script recogniser according to one embodiment of the invention;

Figure 2 is a diagram showing eight pen direction sequences;

Figure 3A illustrates the letter 'a' in its raw form;

Figure 3B illustrates the letter 'a' in its encoded form;

Figure 4 illustrates a cursive word 'and' encoded and its possible ligatures;

Figure 5 illustrates schematically a typical letter net;

Figure 6A illustrates a further example of the letter 'a' in an encoded form;

Figure 6B illustrates examples of encoded entries from a database; and

Figure 7 is a block diagram of a manuscript recogniser;

Figure 8a and 8b are representations of a free-hand flow-chart and its recognised counterpart;

Figure 9 is a diagrammatic representation of a free-hand sketch of a square;

Figure 10 is a representation of the vector coding of the square shown in Figure 9; and,

Figure 11a and 11b are vector representations of two other graphic shapes.

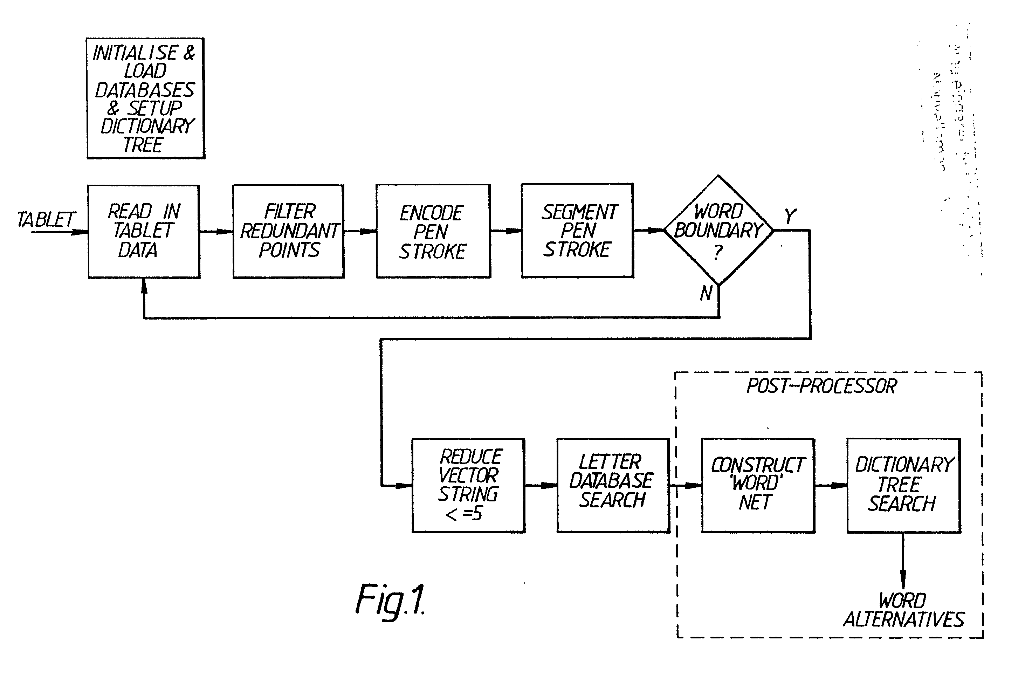

Figure 1 shows the task breakdown for the recognition system. This has been designed so as to be applicable to any style of handwriting (either unconnected or connected) and any combination of character set. It will be appreciated that, for shape recognition in free-hand sketching or drawing, the term "letter" is equivalent to "shape" or "part-shape" and "word" is equivalent to "shape". The major tasks are:

## 1. DATA CAPTURE (Cursive Script and Free-Hand Drawing)

Input data is a quantised trace of the travel of a writing instrument, for example a pen tip, as a user writes on the surface of an electromagnetic tablet. The pen tip position is sampled around 60 time per second, and this information transmitted from the tablet serially, at speeds up to 19200 baud, in either ASCII or packed binary format. Each sample consists of an (x, y) co-ordinate pair. Currently, a NUMONICS 2200 (trade mark) data tablet is used as an input device. It has a resolution of 2500 points per inch and an accuracy of 1000 points per inch. The data capture process buffers the tablet data, filtering out redundant points (usually found within a cluster of points where a writer has paused with the pen tip on the surface before continuing writing). A pen-lift status code is inserted between pen strokes by means of a time-out occurring when an idle period is detected in the data stream transmitted from the tablet.

## 2. DATA ENCODING (Cursive Script and Free-Hand Drawing)

A single detected pen-stroke (between detected pen-up states) is encoded into a vector string.

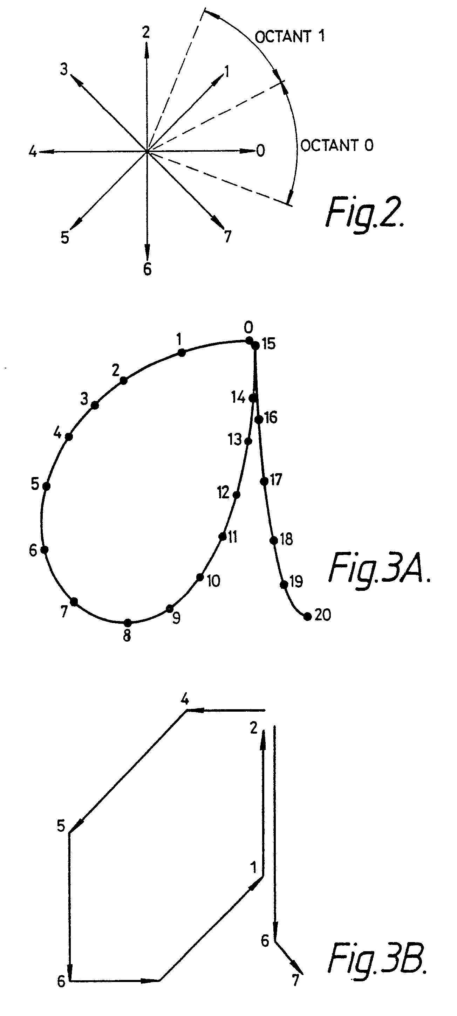

The technique of vector encoding, applied to the co-ordinate string, is a modification of the technique described by Freeman. The travel of the pen-stroke is encoded into a sequence of vectors, each vector being in one of eight possible quantised directions, as shown in Figure 2.

The cumulative travel along a particular vector direction is determined as long as the coordinate sequence indicates that travel is remaining within a particular octant. Once a new octant is entered, the old vector direction and its travel are stored and the cumulative direction in the new octant is monitored. Hence, along the path of the stroke, is obtained a sequence of vectors and their associated lengths which are absolute tablet values. For a single shape, as shown in Figure 3, the lengths are then normalised by expressing each as a fraction of the total travel. This is important as it allows different encodings to be compared independently of their respective sizes as produced on the tablet.

At this stage it is not possible to tell whether the pen-stroke represents:

(a) part of a letter (e.g. the two opposite diagonals making up an 'x').

(b) a single letter (e.g. 'a' - 'z').

(c) part of a word.

(d) a complete word.

Figures 3A and 3B show an example in the use of the system for recognition of cursive script of such a character, the letter 'a', in both its raw and encoded form. The full encoding of the vector string is given below, by dividing each separate vector travel by the total and representing this value as a number of hundredths of the total. Thus:-

'a' = 4:11 5:16 6:16 0:08 1:12 2:10 6:21 7:06 - (1)

(where   11 + 16 + 16 + 8 + 12 + 10 + 21 + 6)  =  100 (Total Character Travel)

The relative vector size information is vital in being able to distinguish between letters which have very similar shapes (for example, 'h' and 'n', or 'a' and 'd').

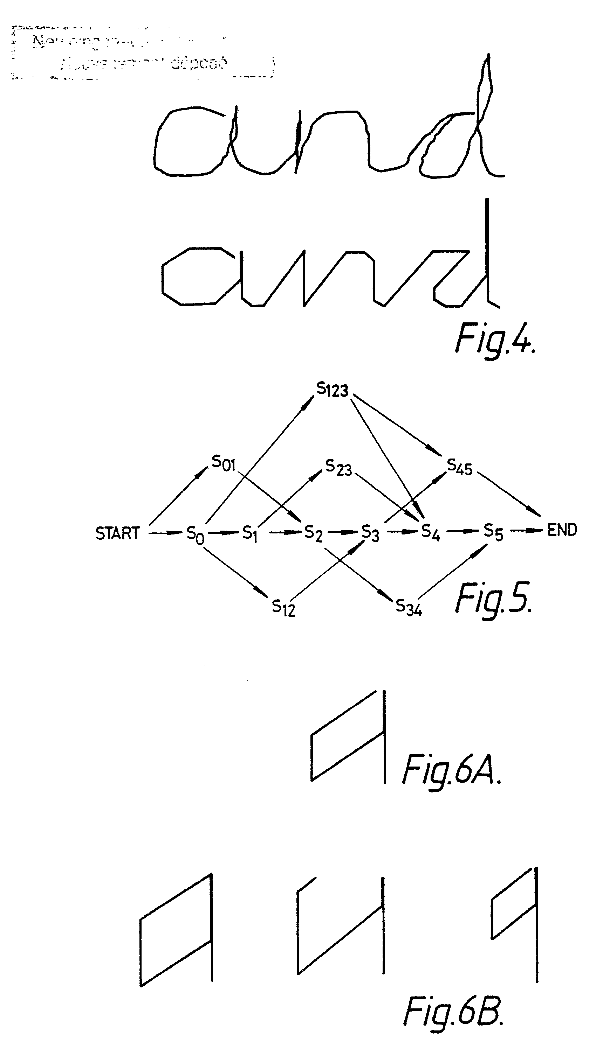

By Freeman encoding particular letter sequences, we have found that analysis of the vector strings produced by different writers indicates a common trend in the vector string where a ligature was known to exist. This manifests itself as a substring, being of length 1 to 5 vectors (depending on the complexity of the ligature) and comprising some sequence of the vectors in the octants '0', '1' and '2'. Figure 4 shows how a cursive word 'and' is encoded by octants only, and its potential ligatures. The Freeman string produced by octant encoding is:

'and' = '34567012670161076710567 01267'

This encoding highlights 5 ligature elements separating 6 sub-string segments (indicating a maximum of 6 letters in the word),

seg 0 = '34567'

seg 1 = '67'

seg 2 = '6'

seg 3 = '767'

seg 4 = '567'

seg 5 = '67'

lig 0 = '012'

lig 1 = '01'

lig 2 = '10'

lig 3 = '10'

lig 4 = '012'

At this stage, it is impossible to tell whether these are intra-letter ligatures (or false ligatures) or valid inter-letter ligatures. In this case, ligatures 1 and 3 are valid inter-letter ligatures and ligatures 0, 2 and 4 are false intra-letter ligatures. In order to detect the letters as written in this instance, one should reconstruct this shape by joining the detected segments, to form longer sub-string segments, via their inter-letter ligatures i.e.,

seg 01 = 'a' = '3456701267'

seg 23 = 'n' = '610767'

seg 45 = 'd' = '56701267'

However, joining the segments either side of the two inter-letter ligatures to provide longer sub-string segments might also indicate the presence of a valid letter. In this instance, these might be;

seg 12 = 'u' = '67016'

seg 34 = 'x' = '76710567'

The joining of segments to produce letter alternatives is found to be a valid method for all the letters of the lower case alphabet except one, the letter 'm'. Because it comprises three downstrokes, it is made up from three segments, joined by two ligatures. The possible presence of the letter 'm' in a word is detected by the identification of three successive 'straight' downstroke segments. Our word 'and' has three such elements, segments 1, 2 and 3. Therefore, one should also consider the possibility of an 'm' existing within this word;

seg 123 = 'm' = '6701610767'

In certain cases, subsequent character identity may be ascertained through analysis of the ligature shape occurring either immediately before or after a segment. For example, the shape of the ligature occurring before a segment identified as a 'c' will help in deciding whether was actually a 'c' or whether it could have been an 'e' or possibly 'z'. Similarly, analysis of the ligature shape occurring after an identified 'u' will show whether a 'u' was intended or a 'w'.

In any event, each longer sub-string segment and any other possible character sub-string segment is normalised to provide proportional lengths of each vector direction as a proportion of the total sub-string length prior to letter determinations. Letter determination is effected by comparing the normalised sub-strings of vector directions with a data base of letters in the form of vector strings.

A letter net is constructed which indicates all the possible letter routes from the beginning to the end of letter sequence via all the different combinations of the letter sequences, as indicated in Figure 5. The number of possible routes through the letter net follows the Fibonacci number series:-

$F(0) = 0$, $F(1) = 1$,... $F(n+1) = F(n) + F(n-1)$, $n >= 0$

i.e. 1, 2, 3, 5, 8, 13, 21, 34, 45...

Therefore, the six sub-string segments found in the word 'and' indicate 13 possible routes through the letter net. The letter 'm' adds another two possible routes.

Each node in the letter net relates to a sub-string segment or sub-string segment combination. It is now necessary to compare these normalised encodings against the encodings that have already been collected and stored in the Freeman database. Encodings stored in the database are of a similar format to the encoding in (1) above. However, the encodings are limited to being no more that 5 vectors in length for any one of the lower case letters 'a' - 'z'. This is achieved for each sub-string segment by a series of vector reductions on any sub-string segment encoding that exceeds 5 vectors, by merging the smallest vector each time into one of its immediate neighbour's directions. Limitation to a maximum of 5 vectors ensures that the number of encodings in the Freeman database is kept manageable, allowing only 19208 possible encodings compared with 6588344 possible encodings if a maximum number of 8 vectors is allowed.

Database comparison is performed in three basic stages:-

1. A search area within the database is determined which ensures that the database searching is kept to an absolute minimum. The database is ordered so that only entries with the same length vector string as the unknown letter and same direction starting vector are used for comparison.

2. Within the determined search area, the vector travel directions for each entry are compared with the travel path of the unknown encoding. Any good matches are retained for the final comparison.

3. A technique of vector length comparison is used to calculate a 'goodness of fit' between the unknown letter encoding and any entries retained from the database.

A Cramer-Von Mises measure technique is preferred in making a reliable measure of 'goodness of fit'. The normalised vector lengths of each element of the unknown vector string are compared with the corresponding length of the vector of each vector string extracted from the database. A difference measure is calculated between two corresponding lengths, and the cumulative modulus of this measure determined over the length of the two vector strings. Figure 6A gives an example of an unknown encoding, with Figure 6B indicating the entries extracted from the Freeman database which have similar vector strings. The full encodings are:-

F(?) = 5:20 6:20 1:20 2:14 6:26
F(a) = 5:17 6:16 1:23 2:20 6:24
F(u) = 5:05 6:25 1:31 2:10 6:29
F(q) = 5:09 6:07 1:14 2:08 6:62

Applying the 'goodness of fit' measure to these encodings produces:-

Fit(?/a) = 100 - {|20-17| + |20-16| + |20-23| + |14-20| + |26-24|} = 82%

Fit(?/u) = 100 - {|20-05| + |20-25| + |20-31| + |14-10| + |26-29|} = 62%

Fit(?/q) = 100 - {|20-09| + |20-07| + |20-14| + |14-08| + |26-62|} = 28%

Therefore, in this instance, the appropriate node in the letter net will be represented by the sequence of alternatives:-

a: 82 u: 62 q: 28

In instances where no vector string in the database can be found to match the unknown encoding, another level of vector reduction is performed, again by incorporation of the smallest vector into one of its neighbours, and a search performed on the reduced vector string. If this fails once again, we insert ?:00 at the node to indicate that the identity of the letter cannot be determined.

The letter net, so constructed, is interrogated by an appropriate post-processing task, the function of which is to identify any valid word routes through the net from start to finish. As an example, an initialisation, a stored word dictionary may be read onto a tree structure, the depth of the tree being dependent on the length of the longest word. It may be possible to find more than one valid route through a letter net, especially for nets constructed from 3, 4 or 5 letter words. However, for longer words, typically 8 letters or more in length, it is usual to find only a single route through the net. In the case where multiple routes are found, a probability measure for each word alternative is preferably determined by summing the probabilities of the particular alternative at each appropriate node passed through in completing the path, and dividing this figure by the number of nodes (or letter count) to give a percentage probability. For example, the word 'and' might produce:

a: 72 -> n:79 -> d:75 = and, (72 + 79 + 75)/3 = 75%

c: 79 -> u:67 -> r:56 -> d:75 = curd, (79 + 67 + 56 + 75)/4 = 69%

a: 72 -> r:66 -> i:85 -> d:75 = arid, (72 + 66 + 85 + 75)/4 = 74.5%

In this instance, the word 'and' appears as the best choice. This is not always the case, and in some instances the correct word may be found well down the list of word alternatives, which could be up to 10 long. In such cases only a higher level of syntactic and semantic analysis at the sentence level can be used to sift out the most appropriate word from the alternative list.

In a similar manner to that described above for cursive script, shapes produced by free-hand sketching or drawing may be recognised.

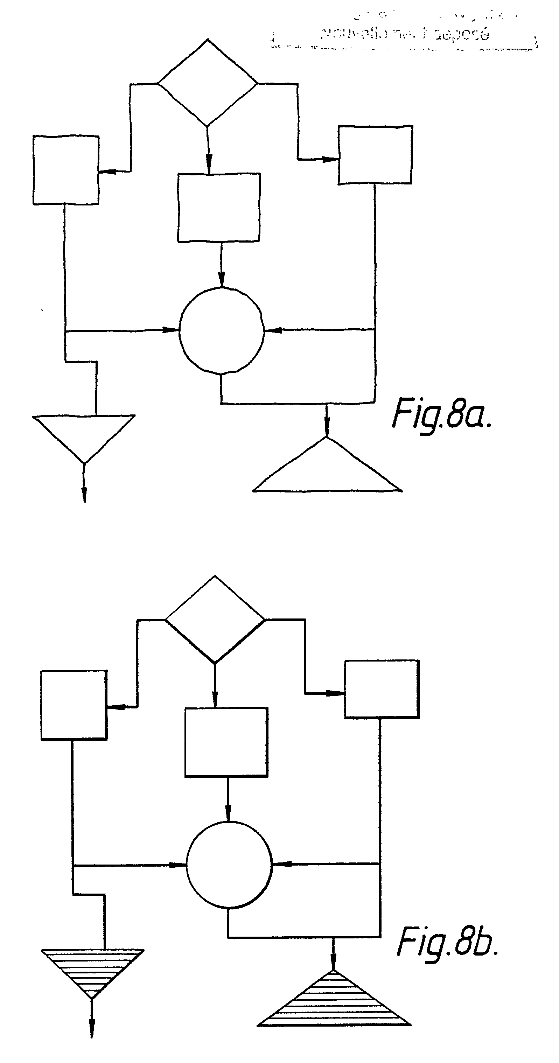

Preferably, hand-drawn sketch information, drawn onto a graphics tablet, is recognised as being one of a predefined database of shapes or part shapes, these being constructed from some combination of straight line and circular arc elements. The recognised shapes can be displayed on the graphics terminal. Latching and aligning of shape and stroke information is performed to formalise the drawing in order to produce diagrams suitable for incorporation in documents, and so on [see Figure 8a-hand-drawn and Figure 8b-recognised]

The technique of Freeman vector coding is again applied to the pen information from the tablet and a vector string representation is produced. This vector sequence is reduced down to some length at which the data base is searched in an attempt to identify the shape.

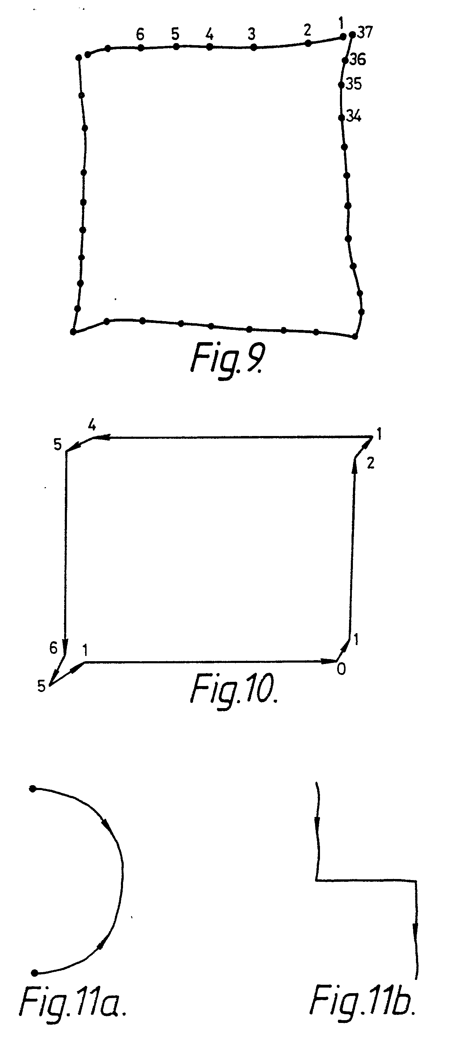

As shown in Figure 9, a free-hand drawing of a square may provide 37 data points captured from the tablet. The path of the pen trace is followed (from point 1).

While the direction of travel is within a particular vector octant, the incremental travel from point to point is calculated. The vector coding might be as shown in Figure 10.

Vector coding = 4 5 6 5 1 0 1 2 1
Associated                                                        travel
150 + 7 + 131 + 7 + 9 + 142 + 5 + 128 + 6 (tablet units)
Total travel - 585 units.

The travel per vector is normalised to produce the encoding
4: 26 5:01 6:22 5:01 1:02 0:24 1:01 2:22 1:01
i.e. the vector constitutes 26% of total travel.
[26 + 01 + 22 + 01 + 02 + 24 + 01 + 22 + 01] = 100%

As described in relation to cursive script recognition, this vector string is reduced down until a correspondence is found with one or more vector encodings in the shape database.

As an example, there are 8 vector encodings for a square shape in the database.
Square codes = 4 edges x 2 directions = 8
SQ 1 = 4:25 6:25 0:25 2:25
2 = 6:25 0:25 2:25 4:25
3 = 0:25 2:25 4:25 6:25
4 = 2:25 4:25 6:25 0:25
5 = 0:25 6:25 4:25 2:25
6 = 6:25 4:25 2:25 0:25
7 = 4:25 2:25 0:25 6:25
8 = 2:25 0:25 6:25 4:25

If we consider our 'rough' drawn square. This is reduced to five vectors until a match is found in the database. At each reduction the smallest vector (indicated by an asterisk) is found and incorporated into its nearest neighbour.

SQ0 = 4:26 5:01 6:22 5:01 1:02 0:24 1:01 2:22 1:01*
SQ1 = 4:26 5:01* 6:22 5:01 1:02 0:24 1:01 2:23

SQ2 = 4:27 6:22 5:01* 1:02 0:24 1:01 2:23
SQ3 = 4:27 6:23 1:02 0:24 1:01* 2:23
SQ4 = 4:27 6:23 1:02* 0:24 2:24
SQ5 = 4:27 6:25 0:24 2:24

At this stage a match will be found with SQ1 in the database. A degree of 'goodness of fit' is calculated by comparing lengths of corresponding vectors.

Goodness of fit subtract lengths of corresponding vectors. Each elemental different ($\Sigma n$) is subtracted from 1 (100% fit)
Fit (sq)
= 1- ($\Sigma_1$ + $\Sigma_2$ + $\Sigma_3$ + $\Sigma_4$)
$\Sigma_1$ = 1.25 - 0.271 = 0.02
$\Sigma_2$ = 10.25 - 0.251 = 0.0
$\Sigma_3$ = 10.24 - 0.251 = 0.01
$\Sigma_4$ = 10.24 - 0.251 = 0.01
Fit = 1 - 0.04 = 0.96 (96% fit)

Hence we identify the shape as a square with a high confidence of fit.

Any other shape or part shape can be put into the database and subsequently recognised.

For example, the arcuate shape of Figure 11a is represented as follows:-
= 0.25 7.25 5.25 4.25
(clockwise)
= 0:25 1:25 3:25 4:25
(anti-clockwise)
and the offset shape of Figure 11b is represented as follows:-
= 6:33 0:33 6:33 (down)
= 2:33 4:33 2:33 (up)

Analyses of the extremities of hand written shapes (corners and sides) allows any newly drawn shapes or part shapes to be analysed in relation to previously drawn strokes in order to determine whether new shapes should be latched to existing shapes.

The graphics database of shapes may be specific e.g. flow chart shapes as shown in Figures 8a and 8b or may be general. In this latter case, it may be necessary to provide more analysable vector directions than the 8 so far exemplified which cannot distinguish between lines at less than 45° difference in direction. This is insufficient for general drawing. It is relatively simple to analyse straight lines in any direction without the use of a database merely by computation. Such a feature could be added to the above described vector analyses in a graphics system.

Electronic paper is a preferred medium for script and graphics recognition. The disjoint tablet and screen approach does not provide the sort of natural interface that a user would require to exploit to the fullest the above invention.

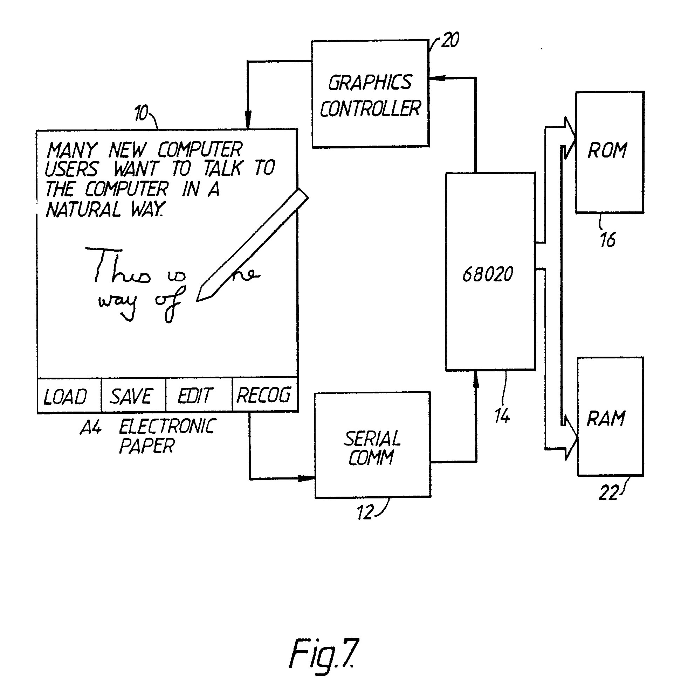

Figure 7 shows an embodiment of apparatus in accordance with the present invention.

Digitised pen-point information will be input from the electronic paper digitiser 10. This information is passed via a serial communications link 12 to a computer 14. In the computer 14, the information is encoded into a Freeman vector string. The Freeman vector string is segmented into possible letter shapes by the identification of ligature shapes and normalised. The letter shapes are compared against a database of amassed vector encodings stored in ROM 16 in order to identify any possible matches which might identify the vector coding as being a particular character. In some instances there is little or no ambiguity, eg. 'f' or 't' in other instances the letter shape could be partly or wholly represented by a number of letters, e.g. 'c', 'e', 'v', 'o', 'i', 'u', 'r'.

When a word break is detected, a letter net is constructed from which a search can be performed to identify the most appropriate route through the net which is deemed a valid word by referencing a predefined word list also stored on ROM 16. The words, as recognised will form a linked list, allowing the writer to perform a number of natural editing functions via menu selection on the electronic paper digitiser 10. A typical sequence of operations might be:-

1. The user writes a paragraph of text on the electronic paper digitiser 10 using the stylus 18. Then pen tip motion is faithfully reproduced via the serial link 12, the computer 14 and a graphics controller 20 back to the electronic paper digitiser 10 which also provides a "screen", just as if the writer were using a pen and paper.

2. Once the user has completed a block of text, he selects the appropriate box on the menu 20 on the digitiser 10. His raw script is deleted and the formatted recognised text is displayed on the digitiser 10. If a particular word is recognised incorrectly the user can peruse the options by simply dotting onto that word.

3. Some editing functionality will allow the writer to delete, change or insert words.

4. When finished the writer can save his script to a file. This file can be reloaded onto the electronic paper digitiser 10, edited or appended. The final script may then be printed.

With electronic paper, applications might include:

a) Remote form filling via a telephone link. The end user has an electronic paper digitiser device connected to a telephone link. The form is downloaded from the originator (finance company, insurance company, retailer), the end user fills in the form, the pen data is transmitted down the telephone line, recognised at the business house end, and recognised text displayed back at the user end.

b) Memo pad applications. A field unit including a digitiser 10, processor 14 and RAM 22 could be used in 'off-site' applications (for instance, when travelling) and the text and graphics information stored page by page. Back at the office, the unit would simply be plugged into the back of a PC to re-produce, page by page, the softcopy, from which the user could perform any necessary editing and print as required.

c) Document creation and editing. The combination of script and graphics recognition with natural editing, integrated into an electronic paper environment would form the basis of a completely natural document creation system, the emphasis being on simplicity of operation for the untrained user. It is hard to imagine that office workstations of the future will not incorporate such an interface.

It will be appreciated that whereas the invention has been described above with reference to specific embodiments there are other technical modifications and variations that could be made and which would be understood to a person skilled in the art. For example, embodiments which are not dependent on real-time recognition of handwritten script are also included within the scope of the invention. Furthermore, the script to be recognised does not have to consist solely of letters, but may include numerals or any other symbols or marks or combinations thereof.

## Claims

1. A method of manuscript recognition, the method including receiving digitised data indicative of manuscript to be recognised, processing the digitised data to derive the manuscript shape in encoded form as a plurality of vector directions, determining from the digitised data a respective quantised length for each vector direction, deriving an encoded vector string indicative of the vector directions and their lengths. comparing sub-string segments of the encoded vector string with stored encoded data representative of ligature shapes and selecting identified first sub-string segments indicative of possible ligature shapes, combining each so identified first sub-string segment with immediately adjacent possible shape sub-string segments in the encoded vector string to derive longer sub-string segments, normalising the quantised length of each vector direction as a proportion of the total length of the longer sub-string segments or possible shape sub-string segments comparing each of the longer sub-string segments and the possible shape sub-string segments with stored encoded data representative of shapes of, for example, characters to identify possible matching character shapes, deriving, in the case of cursive script, a letter net indicative of possible character routes through the encoded vector string, and comparing the combination of characters in each character route with known combinations of stored characters to identify the script.

2. A method as claimed in Claim 1 wherein each encoded vector sub-string is limited to no more than five vector directions.

3. A method as claimed in Claim 2 wherein a series of vector reductions on any encoded vector sub-string that exceeds five vectors is achieved by merging the smallest vector each time into one of the immediately adjacent vector directions.

4. A method of as claimed in any one of Claims 1 to 3 wherein the proportional length of each vector direction in the encoded vector string is compared with the corresponding length of the same vector direction of each possibly matching shape encoded vector string extracted from a database, a difference measure being calculated between two lengths, and the cumulative modulus of this measure determined over the length of the two vector strings.

5. A method of as claimed in any one of Claims 1 to 4 wherein the digitised data indicative of the manuscript to be recognised is generated ideally in real-time from a quantised trace of the travel of a writing instrument on the surface of any x-y data device, the x-y data device generating the digitised data indicating the location of the writing instrument at a predetermined clock pulse rate as the script is written.

6. A method of character recognition as claimed in Claim 5 wherein the x-y data device comprises an electromagnetic tablet.

7. A method of character recognition as claimed in Claim 5 wherein the x-y data device comprises an electronic paper digitiser.

8. A manuscript recogniser including means for receiving digitised data indicative of manuscript to be recognised, processing means for representing the manuscript in encoded form as a plurality of vector directions and for deriving an encoded vector string indicative of the vector directions and their respective lengths, a database, a comparator means for comparing sub-string segments of the encoded vector string with encoded data stored in the database representative of ligature shapes and for identifying first sub-string segments indicative of possible ligature shapes, means for combining each so identified first sub-string segment with immediately adjacent possible shape sub-string segments in the encoded vector string to derive longer sub-string segments, means for normalising the length of each vector direction as a proportion of the total length of each longer sub-string segment and each possible shape sub-string segment, the comparator means also serving for comparing each of the longer sub-string segments and the possible shape sub-string segments with stored encoded data in the database representative of, for example, character shapes to identify possible matching shapes, means for deriving, in the case of cursive script, a letter net indicative of possible character routes through the encoded vector string and for comparing the combination of characters in each character route with known combinations of stored characters to identify the script.

9. A method of manuscript recognition substantially as hereinbefore particularly described with reference to the accompanying drawings.

10. A shape recogniser substantially as hereinbefore particularly described with reference to the accompanying drawings.

Fig.1.

EP 0 382 432 A2

Fig.2.

Fig.3A.

Fig.3B.

Fig.4.

Fig.5.

Fig.6A.

Fig.6B.

MANY NEW COMPUTER
USERS WANT TO TALK TO
THE COMPUTER IN A
NATURAL WAY.

*This is ~he*
*way of*

| LOAD | SAVE | EDIT | RECOG |

A4  ELECTRONIC
PAPER

GRAPHICS
CONTROLLER

68020

ROM

RAM

SERIAL
COMM

Fig.7

Fig.8a.

Fig.8b.

Fig.9.

Fig.10.

Fig.11a.

Fig.11b.